# EUROPEAN PATENT APPLICATION

(11) **EP 4 049 905 A1**
(43) Date of publication of application: **31.08.2022**
(21) Application number: 22158026.9
(22) Date of filing: 22.02.2022
(51) Int. Cl.: B60R 25/24, B60R 25/40

(54) **VEHICLE WITH SMART KEY SYSTEM**

(30) Priority: 26.02.2021 JP 2021029866
(71) Applicant: TOYOTA JIDOSHA KABUSHIKI KAISHA, Toyota-shi Aichi 471-8571 (JP)
(72) Inventor: YAMADA, Koushi, Toyota-shi,, 471-8571 (JP); SUDO, Junichi, Toyota-shi,, 471-8571 (JP); TANAHASHI, Toshio, Toyota-shi,, 471-8571 (JP)
(74) Representative: J A Kemp LLP

(57) **Abstract**

Provided is a vehicle with a smart key system that can suppress damage to vehicle's original driving performance. The vehicle includes a driving control unit for controlling driving of the vehicle. An in-vehicle device includes: an in-vehicle communication unit including an in-vehicle transmitter for transmitting a search signal for searching a mobile device at a predetermined field strength; and a communication control unit for controlling communication of the in-vehicle communication unit. The in-vehicle device or the mobile device includes a control switch for starting or stopping a main power supply of the driving control unit. After the main power supply of the driving control unit is started by the control switch and at least before the vehicle starts driving, the communication control unit controls the in-vehicle transmitter to implement a limitation to set a low or zero field strength of the search signal transmitted from the in-vehicle transmitter.

## Description

### BACKGROUND

### Technical Field

The present disclosure relates to a vehicle with a smart key system.

### Background Art

An example of this type of technique is a smart key system including an in-vehicle device mounted on a vehicle and a mobile device (i.e., smart key) that can wirelessly communicate with the in-vehicle device, as disclosed in JP 2017-183988 A. The in-vehicle device of the smart key system includes an in-vehicle transmitter that transmits a search signal for searching a mobile device. While the vehicle is driving, the field strength of the search signal is limited to zero.

### SUMMARY

By the way, in the vehicle disclosed in JP 2017-183988 A, the in-vehicle transmitter limits the field strength of the search signal to zero while driving so as to reduce power consumption of the in-vehicle transmitter. However, if a typical search signal with a high field strength is kept being transmitted from the in-vehicle transmitter after a main power supply of a driving control unit of the vehicle is started and at least before the vehicle starts driving, it is assumed that the high field strength of the search signal may cause the potential of electrostatic charges on the vehicle to rise. Such electrostatic charges may cause the vehicle to be unable to use its proper driving performance at least before the vehicle starts driving.

The present disclosure has been made in view of the foregoing, and provides a vehicle with a smart key system that reduces the likelihood that the original driving performance of the vehicle is impaired due to a search signal with a high field strength for searching a mobile device.

In view of the foregoing, the vehicle according to the present disclosure is a vehicle with a smart key system including an in-vehicle device and a mobile device that can wirelessly communicate with the in-vehicle device. The vehicle includes a driving control unit configured to control driving of the vehicle. The in-vehicle device includes: an in-vehicle communication unit including an in-vehicle transmitter configured to transmit a search signal for searching the mobile device at a predetermined field strength; and a communication control unit configured to control communication of the in-vehicle communication unit. At least one of the in-vehicle device or the mobile device is provided with a control switch for starting or stopping a main power supply of the driving control unit. After the main power supply is started by the control switch and at least before the vehicle starts driving, the communication control unit controls the in-vehicle transmitter to implement a limitation to set a low or zero field strength of the search signal transmitted from the in-vehicle transmitter.

According to the present disclosure, when the in-vehicle transmitter transmits a search signal for searching the mobile device at a predetermined field strength, upon receiving the search signal the mobile device transmits a position information signal that allows the position of the mobile device to be specified to the in-vehicle device. Consequently, the in-vehicle device can specify the position of the mobile device relative to the vehicle.

Herein, at least one of the in-vehicle device or the mobile device is provided with a control switch. The driving control unit can be started or stopped according to the operation of the control switch. According to the present disclosure, after the main power supply of the driving control unit is started by the operation of the control switch and at least before the vehicle starts driving, a limitation to set a low or zero field strength of the search signal transmitted from the in-vehicle transmitter is implemented. This can reduce the likelihood that the potential of electrostatic charges on the vehicle rises due to the search signal with a high field strength transmitted from the in-vehicle transmitter.

Herein, as long as the limitation to set a low or zero field strength of the search signal transmitted from the in-vehicle transmitter can reduce electric charges on the vehicle, a timing of an end of the limitation is not particularly limited. In some embodiments, after the main power supply is started and before the main power supply is stopped, the communication control unit controls the in-vehicle transmitter to implement a limitation to set a low or zero field strength of the search signal transmitted from the in-vehicle transmitter.

According to this embodiment, after the main power supply of the driving control unit is started and at least before the vehicle starts driving, while the vehicle is driving, and after the driving of the vehicle is stopped and before the main power supply of the driving control unit is stopped, the limitation to set a low or zero field strength of the search signal transmitted from the in-vehicle transmitter is implemented. Therefore, the limitation to set a low or zero field strength of the search signal is implemented also in the state of the vehicle before starting, during driving, and after stopping. In this manner, before the vehicle starts driving (including restarting after stopping) and while the vehicle is driving, the present embodiment can reduce the likelihood that the electric charges accumulate on the vehicle by implementing the limitation to set a low or zero field strength of the search signal.

Further, in some embodiments, the surface of the vehicle is provided with a static eliminator configured to remove static electricity accumulating on the vehicle. In this embodiment, static electricity accumulating on the vehicle can be discharged into atmosphere by using an air ionization self-discharge type static eliminator disclosed in JP 6168157 B, for example.

Further, in some embodiments, the vehicle includes a sliding mechanism configured to slide via a lubricant. The lubricant may contain conductive particles for removing electricity accumulating on the sliding mechanism. The conductive particles contained in the lubricant allows the static eliminator to further remove the static electricity on the sliding mechanism.

Here, in some embodiments, the in-vehicle device includes a detection unit configured to detect an open/closed state of a trunk or a door of the vehicle, and while the detection unit is detecting that the trunk or the door is in an open state, the communication control unit controls the in-vehicle transmitter to remove the limitation to set a low or zero field strength of the search signal.

Here, it may be assumed that search for the position of the mobile device is not available, for example, if a person on the vehicle, carrying the mobile device, opens the door or the trunk, after the driving control unit is started and while the vehicle is parked. Then, in this embodiment, the limitation to set a low or zero field strength of the search signal is removed in a state where the door or the trunk is open, thereby resetting the field strength of the search signal to its initial strength. With such a configuration, even when the mobile device is taken out of the vehicle, search for the mobile device is available by using the in-vehicle device.

In some embodiments, the mobile device includes a mobile communication unit configured to receive the search signal from the in-vehicle transmitter and transmit a position information signal of the mobile device to the in-vehicle device. The communication control unit determines whether the mobile device is inside or outside of the vehicle based on the position information signal, and if the mobile device is outside of the vehicle, controls the in-vehicle transmitter to remove the limitation to set a low or zero field strength of the search signal.

Here, it may be assumed that search for the position of the mobile device outside of the vehicle is not available due to the limitation to set a low or zero field strength of the search signal is implemented, for example, when the mobile device is taken out of the vehicle while the main power supply of the driving control unit is on starting, and also when the main power supply of the driving control unit is remotely started by the control switch of the mobile device outside of the vehicle. Then, in this embodiment, since the limitation to set a low or zero field strength of the search signal is removed when the mobile device is outside of the vehicle, the in-vehicle device can transmit a search signal to the mobile communication unit of the mobile device and receive a position information signal from the mobile communication unit. With such a configuration, the in-vehicle device can obtain the position of the mobile device outside of the vehicle.

In some embodiments, the mobile device includes the control switch. The mobile communication unit transmits a request signal for starting and stopping the main power supply according to operation of the control switch of the mobile device. According to the limitation to set a low or zero field strength of the search signal transmitted from the in-vehicle transmitter, the mobile communication unit implements a limitation to set a low or zero field strength of the position information signal transmitted from the mobile communication unit.

According to this embodiment, according to the limitation to reduce the high field strength of the search signal transmitted from the in-vehicle transmitter to a low or zero field strength, the mobile communication unit implements a limitation to reduce the field strength of the position information signal (position information search signal) with a high field strength transmitted from the mobile communication unit to a low or zero field strength. This can reduce the likelihood that the potential of electrostatic charges accumulating on the vehicle rises due to the position information signal.

According to the present disclosure, at least before the vehicle starts driving, it is possible to reduce the likelihood that the potential of electrostatic charges on the vehicle rises and the original driving performance of the vehicle is impaired due to a search signal with a high field strength for searching a mobile device.

### BRIEF DESCRIPTION OF THE DRAWINGS

FIG. 1 is a schematic conceptual view of a vehicle with a smart key system according to a first embodiment of the present disclosure;
FIG. 2 is a control block diagram of the communication control unit shown in FIG. 1;
FIG. 3 is a flowchart of the control performed by the communication control unit shown in FIG. 2;
FIG. 4 is a block diagram of the communication control unit according to a second embodiment;
FIG. 5 is a flowchart of the control performed by the communication control unit shown in FIG. 4;
FIG. 6 is a block diagram of the communication control unit according to a third embodiment; and
FIG. 7 is a flowchart of the control performed by the communication control unit shown in FIG. 5.

### DETAILED DESCRIPTION

Hereinafter, a vehicle with a smart key system according to some embodiments of the present disclosure will be described with reference to the drawings.

### (First embodiment)

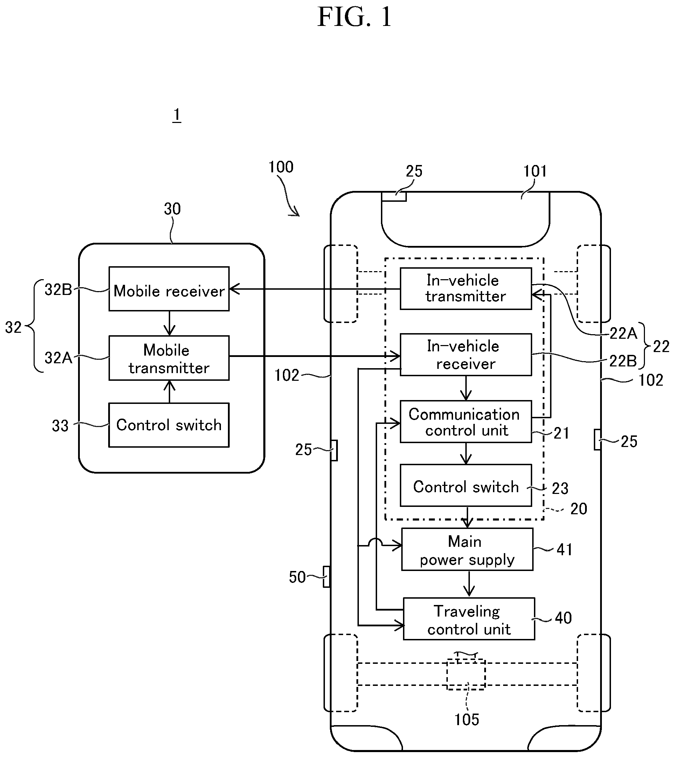

FIG. 1 is a schematic conceptual view of a vehicle 100 according to a first embodiment of the present disclosure. As shown in FIG. 1, the vehicle 100 according to the present embodiment includes a smart key system 1. The vehicle 100 may be any vehicle such as a gasoline vehicle, a hybrid vehicle, an electric vehicle, and a fuel cell-mounted vehicle, and may not be particularly limited as long as it can use the smart key system 1.

The vehicle 100 further includes a driving control unit 40 configured to control the driving of the vehicle 100 and a main power supply 41 configured to supply power to the driving control unit 40. The driving control unit 40 is configured to supply power to a power source (not shown) of the vehicle 100, such as an engine or a drive motor, and control a device that is the power source, for example, as will be described later.

In the present embodiment, the smart key system 1 includes an in-vehicle device 20 mounted on the vehicle 100 and a mobile device 30 that can wirelessly communicate with the in-vehicle device 20. The smart key system 1 is a system in which, according to the operation of the control switch and the like from the mobile device 30 outside of the vehicle, a door 102 of the vehicle 100 is locked or unlocked and the main power supply 41 of the driving control unit 40 (described later) is started (actuated) and stopped via the in-vehicle device 20. The in-vehicle device 20 includes an in-vehicle communication unit 22 configured to communicate with the mobile device 30 and a device or the like outside of the vehicle 100, and a communication control unit 21 configured to control the communication of the in-vehicle communication unit 22.

The driving control unit 40 is started with power supplied from the main power supply 41 by at least one of control switches 23, 33, which will be described later. It should be noted that the operation to start and stop the main power supply 41 of the driving control unit 40 will be described in detail later.

Once the main power supply 41 of the driving control unit 40 is started, the driving control unit 40 controls the driving of the vehicle 100 according to the driver's operations of a shift lever (not shown), an accelerator pedal (not shown), a steering wheel (not shown), a brake pedal (not shown), and the like. It should be noted that the driving control of the vehicle 100 or the like is performed in a commonly known manner of the aforementioned types of vehicles. Thus, detailed descriptions thereof will be omitted.

The in-vehicle communication unit 22 includes an in-vehicle transmitter 22A configured to transmit a search signal for searching the mobile device 30 at a predetermined field strength and an in-vehicle receiver 22B configured to receive a position information signal transmitted from the mobile device 30.

In the present embodiment, the in-vehicle transmitter 22A transmits a search signal under control of the communication control unit 21, not in association with the starting or stopping of the main power supply 41 of the driving control unit 40. It should be noted that in the vehicle 100 of the present embodiment, the in-vehicle transmitter 22A may include a detection unit for detecting a radio wave causing noise with respect to a field strength of a search signal. In this case, the communication control unit 21 may control the in-vehicle transmitter 22A such that the field strength of the search signal increases according to the magnitude of the strength of the detected radio wave causing noise. However, even when the detection unit detects a radio wave causing noise, the communication control unit 21 does not control the in-vehicle transmitter 22A such that the field strength of the search signal increases if conditions for limiting the field strength of the search signal (described later) are satisfied. Instead, the communication control unit 21 controls the in-vehicle transmitter 22A to limit the field strength of the search signal to a low or zero field strength.

The mobile device 30 is a so-called smart key that a driver or the like can carry. The mobile device 30 includes a mobile communication unit 32 configured to receive a search signal transmitted from the in-vehicle transmitter 22A and transmit a position information signal of the mobile device 30 to the in-vehicle device 20. Specifically, the mobile communication unit 32 includes a mobile transmitter 32A and a mobile receiver 32B.

The mobile transmitter 32A is configured to transmit a position information signal of the mobile device 30 and a request signal for starting or stopping the main power supply 41 of the driving control unit 40 of the vehicle 100 (described later), for example. In addition to these signals, the mobile transmitter 32A is configured to transmit a request signal according to a request switch (i.e., control switch), if provided, for requesting the vehicle 100 to operate, such as to lock or unlock the door 102 of the vehicle 100, for example. The mobile receiver 32B is configured to receive a search signal and the like transmitted from the in-vehicle transmitter 22A.

Herein, the position information signal that the mobile transmitter 32A transmits may be an electromagnetic wave having a unique wavelength for specifying the mobile device 30, for example. The position of the mobile device 30 relative to the vehicle 100 may be specified by detecting the strength and direction of such an electromagnetic wave in the in-vehicle receiver 22B. In addition, the position information signal that the mobile transmitter 32A transmits may be a signal relating to a latitude and a longitude obtained by a GPS system (not shown) mounted on the mobile device 30, for example. The mobile device 30 may be a mobile terminal, such as a tablet or a smartphone, for example. As long as the mobile transmitter 32A can transmit a signal that allows the position information of the mobile device 30 to be specified, the position information signal that the mobile transmitter 32A transmits is not particularly limited.

As described above, when the in-vehicle transmitter 22A transmits a search signal for searching the mobile device 30 at a predetermined field strength, upon receiving the search signal the mobile transmitter 32A transmits a position information signal that allows the position of the mobile device 30 to be specified to the in-vehicle device 20. The in-vehicle device 20 can specify the position of the mobile device 30 relative to the vehicle 100 by the communication control unit 21 (described later) based on the position information signal received in the in-vehicle receiver 22B.

In the present embodiment, the in-vehicle device 20 and the mobile device 30 respectively include the control switches 23, 33 to start or stop the main power supply 41 of the driving control unit 40. The control switches 23, 33 are operated by an operator.

According to the operation of the control switch 23 of the in-vehicle device 20 to start or stop the main power supply 41 of the driving control unit 40, a request signal (i.e., start/stop signal) for starting or stopping the main power supply 41 of the driving control unit 40 is transmitted to a main power supply relay (not shown) of the driving control unit 40, for example. According to the operation of the control switch 33 of the mobile device 30 to start or stop the main power supply 41 of the driving control unit 40, a request signal (i.e., start/stop signal) for starting or stopping the main power supply 41 of the driving control unit 40 is transmitted to a main power supply relay (not shown) of the driving control unit 40, for example, via the mobile transmitter 32A and the in-vehicle receiver 22B.

Consequently, the main power supply 41 of the driving control unit 40 is started and stopped according to the request signal for starting or stopping the main power supply 41 of the driving control unit 40 by the control switches 23, 33, and the main power supply 41 can supply or cut power to the driving control unit 40. This allows the driving control unit 40 to be started and stopped. It should be noted that in the present embodiment, the control switch 23 and the control switch 33 are respectively provided in the in-vehicle device 20 and the mobile device 30. However, as long as the driving control unit 40 can be started and stopped, a control switch may be provided in either one of the in-vehicle device 20 or the mobile device 30.

Herein, when the vehicle 100 is a gasoline vehicle, for example, starting the main power supply 41 of the driving control unit 40 actuates the engine (not shown) as a power source. When the vehicle 100 is an electric vehicle, a hybrid vehicle, or a fuel cell-mounted vehicle, for example, starting the main power supply 41 of the driving control unit 40 allows the drive motor for driving (not shown) to be driven. Specifically, when the vehicle 100 is the fuel cell-mounted vehicle, starting the main power supply 41 of the driving control unit 40 may start power generation with fuel cells (not shown), thereby allowing the drive motor for driving (not shown) to be driven.

It should be noted that in the present embodiment, the in-vehicle device 20 includes a detection unit 25 configured to detect an open/closed state of the trunk 101 or the door 102 of the vehicle 100. A signal according to the open/closed state of the trunk 101 and the door 102 detected by the detection unit 25 is transmitted to the communication control unit 21. Further, in the present embodiment, as shown in FIG. 1, the surface of the vehicle 100 is provided with a static eliminator 50 configured to remove static electricity accumulating on the vehicle 100. This allows such static electricity accumulating on the vehicle 100 to be discharged into atmosphere. In addition, the vehicle 100 includes a sliding mechanism 105 configured to slide via a lubricant, such as a differential gear. The lubricant contains conductive particles for removing electricity on the sliding mechanism 105. The conductive particles contained in the lubricant allows the static eliminator 50 to further remove the static electricity on the sliding mechanism 105.

The main power supply 41 of the driving control unit 40 is started and stopped by the control switches 23, 33. In the present embodiment, the power to the communication control unit 21 is kept in the on state irrespective of the starting and stopping of the main power supply 41 of the driving control unit 40. It should be noted that in the present embodiment, the driving control unit 40 and the communication control unit 21 are separate units, but may also be configured to be a single control unit in which the driving control unit 40 and the communication control unit 21 are combined.

The communication control unit 21 includes a computing unit configured to execute control of the in-vehicle communication unit 22, for example, and a storage unit configured to store programs for the control. The communication control unit 21 includes, as software, control programs of the field strength of the search signal that the in-vehicle transmitter 22A transmits, for example.

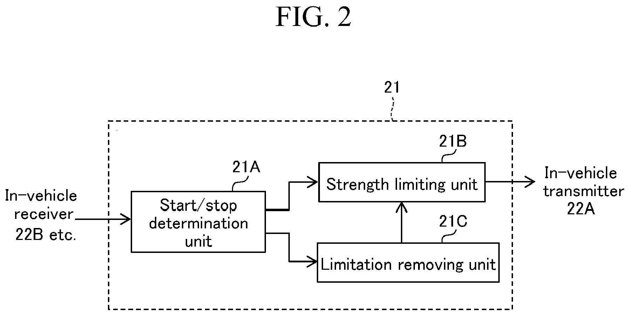

FIG. 2 is a control block diagram showing control of the field strength of the search signal that the in-vehicle transmitter 22A transmits. It should be noted that since the control block diagram relating to driving control or the like is not particularly limited, detailed descriptions thereof will be omitted.

After the main power supply 41 of the driving control unit 40 is started by the control switches 23, 33 and at least before the vehicle 100 starts driving, the communication control unit 21 controls the in-vehicle transmitter 22A to implement a limitation to set a low or zero field strength of a search signal that the in-vehicle transmitter 22A transmits. In the present embodiment, after the main power supply 41 of the driving control unit 40 is started and before the main power supply 41 of the driving control unit 40 is stopped, the communication control unit 21 implements the limitation to set a low or zero field strength of the search signal that the in-vehicle transmitter 22A transmits.

Specifically, as shown in FIG. 2, the communication control unit 21 includes a start/stop determination unit 21A, a strength limiting unit 21B, and a limitation removing unit 21C.

The start/stop determination unit 21A is configured to determine the starting and stopping of the main power supply 41 on the basis of one of a start/stop signal of the driving control unit 40 or a start/stop signal of the control switch 33 of the mobile device 30 via the in-vehicle receiver 22B or the control switch 23 of the in-vehicle device 20. Specifically, upon receiving a start signal and a stop signal according to the starting or stopping of the driving control unit 40, the start/stop determination unit 21A determines that the driving control unit 40 has been started and stopped. In this case, the start/stop determination unit 21A determines that the main power supply 41 of the driving control unit 40 has been started and stopped on the basis of the substantial starting and stopping of the driving control unit 40. This can avoid an erroneous determination of the starting and stopping of the main power supply 41 of the driving control unit 40. In particular, if it is erroneously determined that the main power supply 41 of the driving control unit 40 has been stopped, static electricity may be generated in the vehicle 100 because the limitation on the field strength of the search signal is removed. Therefore, upon receiving a stop signal from the driving control unit 40, the start/stop determination unit 21A suitably determines that the main power supply 41 of the driving control unit 40 has been stopped.

The strength limiting unit 21B is configured to transmit a control signal for limiting the field strength of the search signal to the in-vehicle transmitter 22A in response to a result of determination by the start/stop determination unit 21A that the main power supply 41 of the driving control unit 40 has been started. It should be noted that before the strength limiting unit 21B implements the limitation, the in-vehicle transmitter 22A transmits a search signal at a field strength (i.e., a preset high field strength) of a search signal that allows search for the mobile device 30 inside of the vehicle.

The strength limiting unit 21B limits the field strength of the search signal, for example, to zero or limits the field strength of the search signal to a lower field strength than the preset field strength. As used herein, "lower field strength" may be a field strength at which search for the mobile device 30 inside of the vehicle using a search signal is not available. In the present embodiment, the strength limiting unit 21B can implement the limitation to set a low or zero field strength of the search signal transmitted from the in-vehicle transmitter by controlling an adjustment unit (not shown) mounted on the in-vehicle transmitter 22A to adjust the field strength.

The limitation removing unit 21C is configured to remove the limitation on the field strength of the search signal implemented by the strength limiting unit 21B, that is, to reset the field strength limited by the strength limiting unit 21B to its initial strength. In the present embodiment, a timing of the removing is based on one of a stop signal of the driving control unit 40 or a stop signal of the control switch 33 of the mobile device 30 via the in-vehicle receiver 22B or the control switch 23 of the in-vehicle device 20. The limitation removing unit 21C causes the strength limiting unit 21B to remove the limitation on the field strength of the search signal in response to a result of determination by the start/stop determination unit 21A that the driving control unit 40 has been stopped.

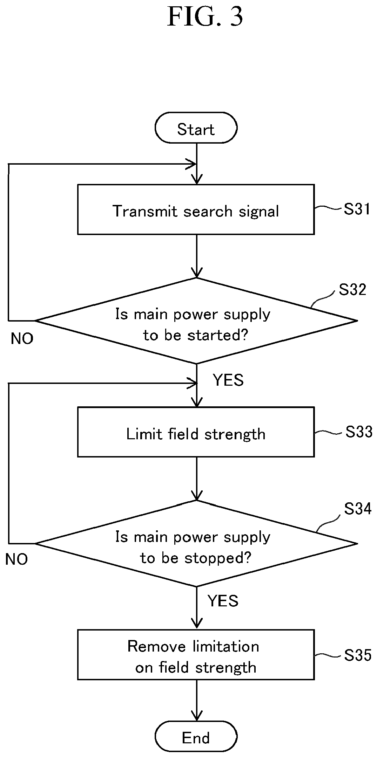

Hereinafter, a control flow of the smart key system 1 according to the present embodiment will be described with reference to FIG. 3. First, the vehicle 100 is being parked prior to step S31. In this state, the in-vehicle transmitter 22A of the in-vehicle device 20 is transmitting a search signal at a specific field strength, and the main power supply 41 of the driving control unit 40 is being stopped.

Next, in step S32, the start/stop determination unit 21A determines the starting of the driving control unit 40. In step S32, if it is determined that the main power supply 41 of the driving control unit 40 is to be started (or has already been started) according to a request signal (YES), the control proceeds to step S33, where the strength limiting unit 21B limits the high field strength of the search signal that the in-vehicle transmitter 22A transmits. Meanwhile, if it is determined that the main power supply 41 of the driving control unit 40 is not started (NO), the control goes back to step S31, where the in-vehicle transmitter 22A continues transmitting a search signal at the preset high field strength.

Next, in step S34, the start/stop determination unit 21A determines the stopping of the main power supply 41 of the driving control unit 40. In step S34, if it is determined that the main power supply 41 of the driving control unit 40 is to be stopped (or has already been stopped) according to a request signal (YES), the control proceeds to step S35, where the limitation removing unit 21C causes the strength limiting unit 21B to remove the limitation on the field strength of the search signal. Meanwhile, in step S34, if it is determined that the main power supply 41 of the driving control unit 40 is not to be stopped (NO), the control goes back to step S33, where the strength limiting unit 21B continues limiting the field strength of the search signal that the in-vehicle transmitter 22A transmits.

According to the present embodiment, after the main power supply 41 of the driving control unit 40 is started (specifically, after the determination of the starting) and at least before the vehicle 100 starts driving, the communication control unit 21 limits the high field strength of the search signal that the in-vehicle transmitter 22A transmits for position information. This can reduce the likelihood that the potential of electrostatic charges on the vehicle rises due to the search signal with the high field strength from the in-vehicle transmitter 22A.

Particularly in the present embodiment, after the main power supply 41 of the driving control unit 40 is started (specifically, after the determination of the starting) and before the main power supply 41 of the driving control unit 40 is stopped (specifically, before the determination of the stopping), the high field strength of the search signal that the in-vehicle transmitter 22A transmits for position information is limited. Therefore, from step S33 to step S34, the field strength of the search signal is limited also in the state of the vehicle 100 before starting, during driving, and after stopping. In this manner, before the vehicle 100 starts driving (including restarting after stopping) and while the vehicle 100 is driving, the present embodiment can reduce the likelihood that the electric charges accumulate on the vehicle due to the strong radio wave of the search signal for position information and the original driving performance of the vehicle is impaired.

### (Second embodiment)

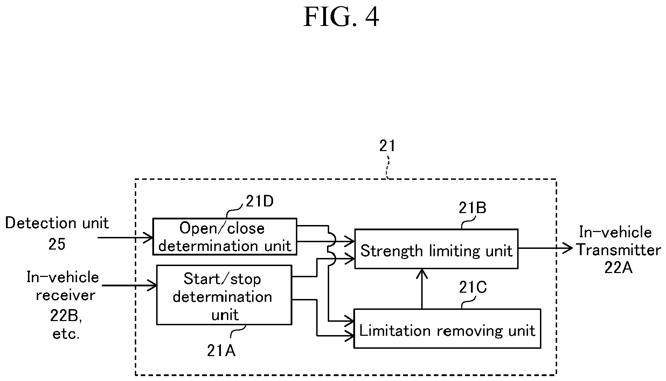

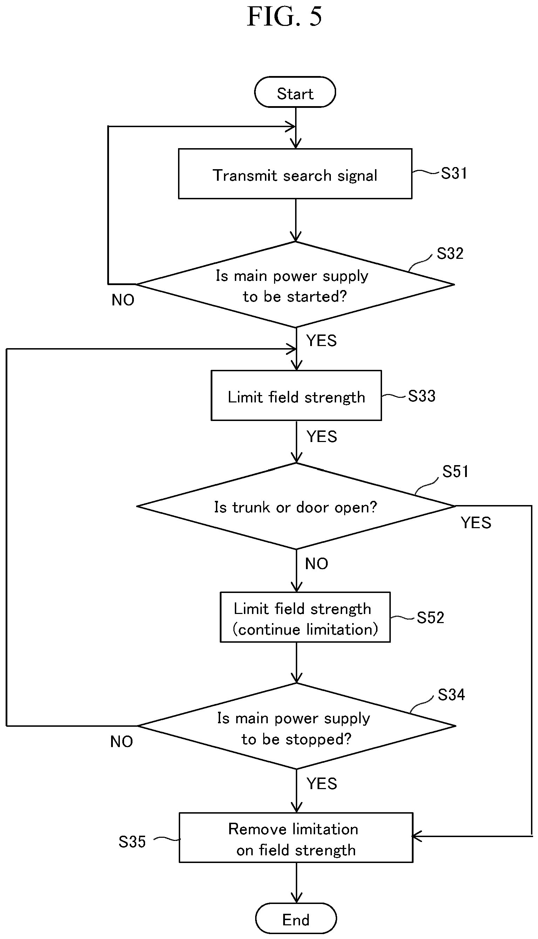

Hereinafter, the vehicle 100 according to a second embodiment will be described. The second embodiment is different from the first embodiment in that a limitation on a field strength of a search signal is implemented according to an open/closed state of the trunk 101 and the door 102 of the vehicle 100. Hereinafter, such a difference from the first embodiment will be described with reference to FIG. 4 and FIG. 5.

In the present embodiment, as shown in FIG. 4, the communication control unit 21 receives a detection signal from the detection unit 25 (see FIG. 1). The detection unit 25 detects an open/closed state of the trunk 101 and the door 102 of the vehicle 100. In the present embodiment, while the detection unit 25 is detecting that the trunk 101 or the door 102 is in an open state, the communication control unit 21 removes the limitation to set a low or zero field strength of the search signal.

Specifically, in the present embodiment, the communication control unit 21 includes an open/close determination unit 21D in addition to the configuration according to the first embodiment. The open/close determination unit 21D is configured to determine whether the trunk 101 or the door 102 is open via the detection unit 25. The open/close determination unit 21D determines an open/closed state of the trunk 101 or the door 102 at certain intervals (e.g., a few milliseconds) and transmits a result of determination to the limitation removing unit 21C.

If the open/close determination unit 21D determines that the trunk 101 or the door 102 is open in a state where the strength limiting unit 21B is implementing the limitation to set a low or zero field strength of the search signal, the limitation removing unit 21C causes the strength limiting unit 21B to remove the limitation on the field strength of the search signal. Meanwhile, if the open/close determination unit 21D determines that the trunk 101 or the door 102 is closed, the limitation removing unit 21C causes the strength limiting unit 21B to continue limiting the field strength.

Hereinafter, a control flow of the smart key system 1 according to the present embodiment will be described with reference to FIG. 5. In step S31 to step S33, the same control as the first embodiment is performed. Next, in step S51, the open/close determination unit 21D determines whether the trunk 101 or the door 102 is open.

Herein, if it is determined that the trunk 101 or the door 102 is not open (NO), this means that the trunk 101 and the door 102 are entirely closed. Then, the control proceeds to step S52, and the limitation on the field strength of the search signal is continued in the same manner as the first embodiment. Meanwhile, if it is determined that either one of the trunk 101 or the door 102 is open (YES), the control proceeds to step S35, where the limitation removing unit 21C causes the strength limiting unit 21B to remove the limitation on the field strength of the search signal. It should be noted that in step S34 and step S35, the control is performed in the same manner as the first embodiment.

According to the present embodiment, for example, after the main power supply 41 of the driving control unit 40 is started and while the vehicle 100 is parked, a person on the vehicle 100, carrying the mobile device 30, may sometimes open the trunk 101 or the door 102. In such a case, in step S35, the limitation removing unit 21C removes the limitation on the field strength of the search signal, thereby resetting the field strength of the search signal to its initial strength.

With such a configuration, even when the mobile device 30 is taken out of the vehicle, search for the mobile device 30 is available. It should be noted that in a state where the trunk 101 or the door 102 of the vehicle 100 is entirely closed, the limitation on the field strength of the search signal implemented by the strength limiting unit 21B is continued in step S52. Thus, the same effect as that in the first embodiment can be obtained.

### (Third embodiment)

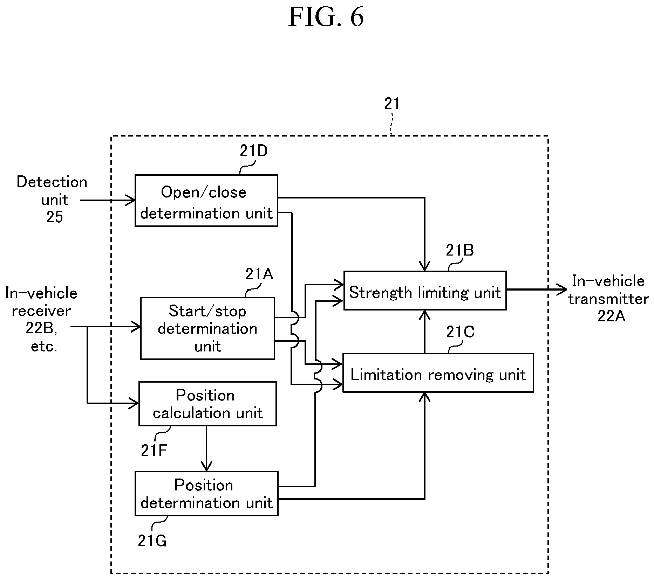

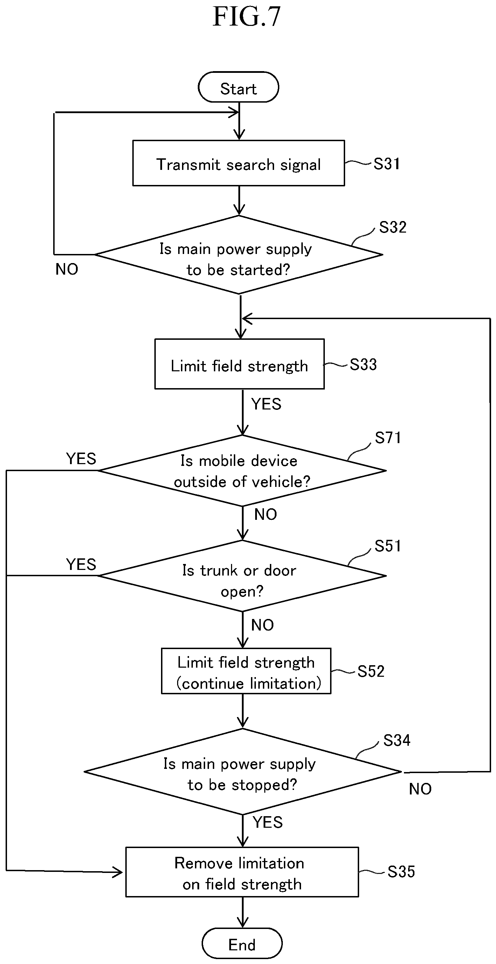

Hereinafter, the vehicle 100 according to a third embodiment will be described. The third embodiment is different from the second embodiment in that a limitation on a field strength of a search signal is implemented according to whether the mobile device 30 is outside or inside of the vehicle. Hereinafter, such a difference from the second embodiment will be described with reference to FIG. 6 and FIG. 7. It should be noted that the configuration making such a difference may be applied to the first embodiment.

In the same manner as the first embodiment, also in the present embodiment, the mobile communication unit 32 of the mobile device 30 receives a search signal from the in-vehicle transmitter 22A and transmits a position information signal of the mobile device 30 to the in-vehicle device 20, as described above.

In the present embodiment, as shown in FIG. 6, the communication control unit 21 further includes a position calculation unit 21F and a position determination unit 21G. Specifically, the position calculation unit 21F is configured to calculate the position of the mobile device 30 on the basis of a position information signal received in the in-vehicle receiver 22B. The position determination unit 21G is configured to determine whether the mobile device 30 is outside or inside of the vehicle on the basis of the calculated position.

As described above, as long as the position of the mobile device 30 to be calculated can be used to determine whether the mobile device 30 is outside or inside of the vehicle, its calculation method is not particularly limited. For example, the position of the mobile device 30 to be calculated may be a direction and position of the mobile device 30 relative to the vehicle 100 or an absolute position including a latitude and a longitude.

If the position determination unit 21G determines that the mobile device 30 is outside of the vehicle in a state where the field strength of the search signal is limited by the strength limiting unit 21B, the limitation removing unit 21C removes the limitation on the field strength of the search signal. If the position determination unit 21G determines that the mobile device 30 is inside of the vehicle, the limitation on the field strength of the search signal implemented by the strength limiting unit 21B is continued.

Hereinafter, a control flow of the smart key system 1 according to the present embodiment will be described with reference to FIG. 7. In step S31 to step S33, the same control as the first embodiment is performed. Next, in step S71, the position calculation unit 21F calculates a position of the mobile device 30 and the position determination unit 21G determines whether the mobile device 30 is outside of the vehicle.

If the position determination unit 21G determines that the mobile device 30 is not outside of the vehicle (NO), this means that the mobile device 30 is inside of the vehicle. In such a case, one of the requirements of limiting the field strength of the search signal is satisfied, and thus the control proceeds to step S51. Meanwhile, if the position determination unit 21G determines that the mobile device 30 is outside of the vehicle (YES), this means that the mobile device 30 is outside of the vehicle. Then, the limitation removing unit 21C removes the limitation on the field strength of the search signal in step S35. The other steps are performed in the same manner as the second embodiment.

According to the present embodiment, since the limitation on the field strength of the search signal is removed when the mobile device 30 is outside of the vehicle, the in-vehicle device 20 can transmit a search signal to the mobile receiver 32B of the mobile device 30 and receive a position information signal from the mobile transmitter 32A. With such a configuration, it is possible to obtain position information of the mobile device 30 outside of the vehicle.

In the first to third embodiments, for example, the strength limiting unit 21B may implement a limitation to set a low or zero field strength of the aforementioned position information signal, which is transmitted from the mobile transmitter 32A of the mobile communication unit 32, according to the limitation to set a low or zero field strength of the search signal that the in-vehicle transmitter 22A transmits.

In this case as well, it is possible to reduce static electricity accumulating on the vehicle by limiting the field strength of the position information signal. It should be noted that limiting the field strength of the position information signal will not cause any particular problem in the operation of the control switch 33 for the mobile communication unit 32.

Although the embodiments of the present disclosure have been described in detail above, the present disclosure is not limited thereto, and various design changes can be made within the spirit and scope of the present disclosure recited in the claims.

### DESCRIPTION OF SYMBOLS

- 1: Smart key system
- 20: In-vehicle device
- 21: Communication control unit
- 22: In-vehicle communication unit
- 22A: In-vehicle transmitter
- 23: Control switch
- 30: Mobile device
- 32: Mobile communication unit
- 33: Control switch
- 50: Static eliminator
- 100: Vehicle
- 101: Trunk
- 102: Door
- 105: Sliding mechanism

## Claims

1. A vehicle (100) with a smart key system (1) including an in-vehicle device (20) and a mobile device (30) that can wirelessly communicate with the in-vehicle device (20),
the vehicle (100) comprising a driving control unit (40) configured to control driving of the vehicle (100),
wherein:
the in-vehicle device (20) includes: an in-vehicle communication unit (22) including an in-vehicle transmitter (22A) configured to transmit a search signal for searching the mobile device (30) at a predetermined field strength; and a communication control unit (21) configured to control communication of the in-vehicle communication unit (22),
at least one of the in-vehicle device (20) or the mobile device (30) is provided with a control switch (33) or starting or stopping a main power supply (41) of the driving control unit (40), and
after the main power supply (41) is started by the control switch (33) and at least before the vehicle (100) starts driving, the communication control unit (21) controls the in-vehicle transmitter (22A) to implement a limitation to set a low or zero field strength of the search signal transmitted from the in-vehicle transmitter (22A).

2. The vehicle (100) with the smart key system (1) according to claim 1, wherein after the main power supply (41) is started and before the main power supply (41) is stopped, the communication control unit (21) controls the in-vehicle transmitter (22A) to implement a limitation to set a low or zero field strength of the search signal transmitted from the in-vehicle transmitter (22A).

3. The vehicle (100) with the smart key system (1) according to claim 1 or 2, wherein a surface of the vehicle (100) is provided with a static eliminator (50) configured to remove static electricity accumulating on the vehicle (100).

4. The vehicle (100) with the smart key system (1) according to any one of claims 1 to 3, wherein the vehicle (100) includes a sliding mechanism (105) configured to slide via a lubricant, the lubricant containing conductive particles for removing electricity accumulating on the sliding mechanism (105).

5. The vehicle (100) with the smart key system (1) according to any one of claims 1 to 4, wherein:
the in-vehicle device (20) includes a detection unit (25) configured to detect an open/closed state of a trunk (101) or a door (102) of the vehicle (100), and
while the detection unit (25) is detecting that the trunk (101) or the door (102) is in an open state, the communication control unit (21) controls the in-vehicle transmitter (22A) to remove the limitation to set a low or zero field strength of the search signal.

6. The vehicle (100) with the smart key system (1) according to any one of claims 1 to 5, wherein:
the mobile device (30) includes a mobile communication unit (32) configured to receive the search signal from the in-vehicle transmitter (22A) and transmit a position information signal of the mobile device (30) to the in-vehicle device (20), and
the communication control unit (22) determines whether the mobile device (30) is inside or outside of the vehicle (100) based on the position information signal, and if the mobile device (30) is outside of the vehicle (100), controls the in-vehicle transmitter (22A) to remove the limitation to set a low or zero field strength of the search signal.

7. The vehicle (100) with the smart key system (1) according to claim 6,
wherein:
the mobile device (30) includes the control switch (33),
the mobile communication unit (32) transmits a request signal for starting and stopping the main power supply (41) according to operation of the control switch (33) of the mobile device (30), and
according to the limitation to set a low or zero field strength of the search signal transmitted from the in-vehicle transmitter (22A), the mobile communication unit (32) implements a limitation to set a low or zero field strength of the position information signal transmitted from the mobile communication unit (32).
